# EUROPÄISCHE PATENTSCHRIFT

(11) **EP 0 984 686 B1**
(45) Veröffentlichungstag und Bekanntmachung des Hinweises auf die Patenterteilung: **20.02.2002**
(21) Anmeldenummer: 98928275.1
(22) Anmeldetag: 15.05.1998
(51) Int. Cl.: A01N 35/10

(54) **VERFAHREN ZUR BEKÄMPFUNG VON SCHADPILZEN**
METHOD FOR COMBATING HARMFUL FUNGI
PROCEDE POUR LUTTER CONTRE LES CHAMPIGNONS NUISIBLES

(30) Priorität: 28.05.1997 DE 19722222
(43) Veröffentlichungstag der Anmeldung: 15.03.2000
(73) Patentinhaber: BASF AKTIENGESELLSCHAFT, 67056 Ludwigshafen (DE)
(72) Erfinder: GRAMMENOS, Wassilios, D-67063 Ludwigshafen (DE); MÜLLER, Ruth, D-67159 Friedelsheim (DE); SAUTER, Hubert, D-68167 Mannheim (DE); BAYER, Herbert, D-68159 Mannheim (DE); GROTE, Thomas, D-67105 Schifferstadt (DE); GYPSER, Andreas, D-68159 Mannheim (DE); KIRSTGEN, Reinhard, D-67434 Neustadt (DE); MÜLLER, Bernd, D-67227 Frankenthal (DE); PTOCK, Arne, D-67067 Ludwigshafen (DE); RÖHL, Franz, D-67105 Schifferstadt (DE); LORENZ, Gisela, D-67434 Neustadt (DE); AMMERMANN, Eberhard, D-64646 Heppenheim (DE); STRATHMANN, Siegfried, D-67117 Limburgerhof (DE)
(74) Vertreter: Fitzner, Uwe, Dr.
(86) Internationale Anmeldenummer: EP9802880
(87) Internationale Veröffentlichungsnummer: WO9853682

(56) Entgegenhaltungen:
- WO-A-96/32373
- WO-A-97/01530

## Beschreibung

Die vorliegende Erfindung betrifft ein Verfahren zur Bekämpfung von Schadpilzen, welches dadurch gekennzeichnet ist, daß man die Pilze oder die vor Pilzbefall zu schützenden Materialien, Pflanzen, den Boden oder Saatgüter mit einer wirksamen Menge eines Bisoxims der allgemeinen Formel I 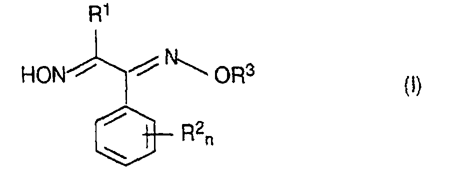 oder dessen Salz oder Addukt behandelt, wobei der Index und die Substituenten die folgende Bedeutung haben:
- R¹: Halogen, C₁-C₆-Alkyl oder C₁-C₄-Halogenalkyl;
- R²: Cyano, Nitro, Halogen, C₁-C₄-Alkyl, C₁-C₄-Halogenalkyl, C₁-C₄-Alkoxy, C₁-C₄-Halogenalkoxy, C₁-C₄-Alkylthio, C₁-C₄-Alkylamino, Di-C₁-C₄-alkylamino, C₁-C₄-Alkylaminocarbonyl,
Phenyl, Phenoxy oder Phenylthio, wobei diese Reste im Phenylteil partiell oder vollständig halogeniert sein können und/oder eine bis drei der folgenden Gruppen tragen können: Cyano, Formyl, C₁-C₄-Alkyl, C₁-C₄-Halogenalkyl, C₁-C₄-Alkylcarbonyl, C₁-C₄-Alkoxy, C₁-C₄-Halogenalkoxy, Phenyl oder Naphthyl;
- n: 0, 1, 2 oder 3, wobei die Reste R² verschieden sein können, wenn n 2 oder 3 bedeutet;
- R³: C₁-C₁₀-Alkyl, C₁-C₆-Halogenalkyl, C₃-C₆-Alkenyl, C₃-C₆-Halogenalkenyl, C₃-C₆-Alkinyl, C₃-C₆-Halogenalkinyl oder Phenyl-C₁-C₄-alkyl.

Außerdem betrifft die Erfindung die Verwendung der Verbindungen I zur Herstellung eines zur Bekämpfung von Schadpilzen geeigneten Mittels.

Bisoxime der eingangs definierten Formel I sind aus der Literatur (vgl. WO-A 95/18,789; WO-A 95/21,153; WO-A 95/21,154; WO-A 95/21,156; WO-A 96/06,072; WO-A 96/16,026; WO-A 96/16,030; WO-A 97/01,530; WO-A 97/02,255; DE Anm. Nr. 19 540 989; DE Anm. Nr. 19 545 878; DE Anm. Nr. 19 548 370) als Zwischenprodukte zur Herstellung von fungiziden Wirkstoffen des Typs der Formel A bekannt: 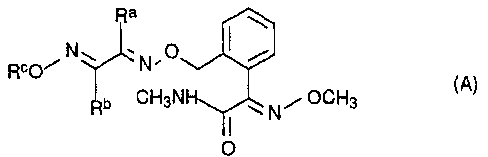 Abgesehen von der Brauchbarkeit dieser Verbindungen als Zwischenprodukte ist diesen Referaten jedoch keine weitergehende Anwendbarkeit der Bisoxime zu entnehmen.

Außerdem werden in der PCT/EP 96/01,306 Verfahren zur Herstellung von weitgehend isomerenreinen Bisoximen des Typs der Verbindungen I beschrieben. Im Hinblick auf die Verwendung derartiger Verbindungen wird in diesem Referat auf die Eignung als Zwischenprodukt zur Herstellung der Verbindungen des Typs (A) verwiesen.

Der vorliegenden Erfindung lagen als Aufgabe Verbindungen mit fungiziden Eigenschaften zugrunde. Demgemäß wurde gefunden, daß die bekannten Bisoxime geeignet sind, Schadpilze wirksam zu bekämpfen.

Die Bedeutung der bei der Definition der Verbindungen I verwendeten Sammelbegriffe ergibt sich beispielsweise aus den entsprechenden Angaben in WO-A 95/21,156.

Im Hinblick auf ihre bestimmungsgemäße Verwendung zur Bekämpfung von Schadpilzen eignen sich besonders Verbindungen I, in denen R¹ für Fluor, Chlor oder Brom (insbesondere Chlor) oder Methyl, Ethyl, Propyl oder iso-Propyl (insbesondere Methyl oder Ethyl) steht.

Außerdem werden Verbindungen I bevorzugt, in denen n für 1, 2 oder 3 (besonders 1 oder 2) steht.

Für den Fall, daß n für 1 steht werden Verbindungen I bevorzugt, in denen der Rest R² in der 4-Position des Phenylrings gebunden ist.

Für den Fall, daß n für 2 steht werden Verbindungen I bevorzugt, in denen die Reste R² in der relativen Positionierung 2,4 oder 3,4 (besonders 2,4) gebunden sind.

Für den Fall, daß n für 3 steht werden Verbindungen I bevorzugt, in denen die Reste R²-in der relativen Positionierung 2,4,5 oder 2,4,6 (besonders 2,4,5) gebunden sind.

Als Reste R² eignen sich besonders Halogen (insbesondere Fluor, Chlor und Brom), C₁-C₄-Alkyl (insbesondere Methyl), C₁-C₄-Halogenalkyl (insbesondere Trifluormethyl), C₁-C₄-Alkoxy (insbesondere Methoxy), C₁-C₄-Halogenalkoxy (insbesondere Trifluormethoxy) und C₁-C₄-Alkylthio (insbesondere Methylthio), Nitro und Dimethylamino.

Daneben werden Verbindungen I bevorzugt, in denen R² (vorzugsweise einer der Reste R²) für Phenyl, Phenoxy oder Phenylthio (insbesondere Phenyl) steht, wobei diese Reste im Phenylteil vorzugsweise eine bis drei der folgenden Gruppen tragen können: Halogen (insbesondere Chlor und Brom), C₁-C₄-Alkyl (insbesondere Methyl), C₁-C₄-Halogenalkyl (insbesondere Trifluormethyl), C₁-C₄-Alkoxy (insbesondere Methoxy) und C₁-C₄-Halogenalkoxy (insbesondere Trifluormethoxy).

Insbesondere werden auch Verbindungen I bevorzugt, in denen mindestens einer der Reste R² für Halogen steht.

In Bezug auf den Rest R³ werden Verbindugen I bevorzugt, die in dieser Position
- C₁-C₁₀-Alkyl (besonders C₁-C₄-Alkyl),
- C₃-C₆-Alkenyl oder C₃-C₆-Halogenalkenyl [besonders C₃-C₄-Alkenyl, welches ein bis drei (insbesondere ein oder zwei) Halogenatome (insbesondere Chlor oder Brom) tragen kann],
- C₃-C₆-Alkinyl oder C₃-C₆-Halogenalkinyl [besonders C₃-C₄-Alkinyl, welches ein bis drei (insbesondere ein oder zwei) Halogenatome (insbesondere Chlor oder Brom) tragen kann], oder
- Phenyl-C₁-C₄-alkyl (insebsondere Benzyl).

Die Verbindungen I eignen sich als Fungizide. Sie zeichnen sich durch eine hervorragende Wirksamkeit gegen ein breites Spektrum von pflanzenpathogenen Pilzen, insbesondere aus der Klasse der *Ascomyceten, Deuteromyceten, Phycomyceten* und *Basidiomyceten,* aus. Sie sind zum Teil systemisch wirksam und können im Pflanzenschutz als Blatt- und Bodenfungizide eingesetzt werden.

Besondere Bedeutung haben sie für die Bekämpfung einer Vielzahl von Pilzen an verschiedenen Kulturpflanzen wie Weizen, Roggen, Gerste, Hafer, Reis, Mais, Gras, Bananen, Baumwolle, Soja, Kaffee, Zuckerrohr, Wein, Obst- und Zierpflanzen und Gemüsepflanzen wie Gurken, Bohnen, Tomaten, Kartoffeln und Kürbisgewächsen, sowie an den Samen dieser Pflanzen.

Speziell eignen sie sich zur Bekämpfung folgender Pflanzenkrankheiten:
- Alternaria-Arten an Gemüse und Obst,
- *Botrytis cinerea* (Grauschimmel) an Erdbeeren, Gemüse, Zierpflanzen und Reben,
- *Cercospora arachidicola* an Erdnüssen,
- *Erysiphe cichoracearum* und *Sphaerotheca fuliginea* an Kürbisgewächsen,
- *Erysiphe graminis* (echter Mehltau) an Getreide,
- *Fusarium-* und *Verticillium*-Arten an verschiedenen Pflanzen,
- *Helminthosporium-*Arten an Getreide,
- *Mycosphaerella*-Arten an Bananen,
- *Phytophthora infestans* an Kartoffeln und Tomaten,
- *Plasmopara viticola* an Reben,
- *Podosphaera leucotricha* an Äpfeln,
- *Pseudocercosporella herpotrichoides* an Weizen und Gerste,
- *Pseudoperonospora*-Arten an Hopfen und Gurken,
- *Puccinia-*Arten an Getreide,
- *Pyricularia oryzae* an Reis,
- *Rhizoctonia*-Arten an Baumwolle, Reis und Rasen,
- *Septoria nodorum* an Weizen,
- *Uncinula necator* an Reben,
- *Ustilago*-Arten an Getreide und Zuckerrohr, sowie
- *Venturia inaequalis* (Schorf) an Äpfeln.

Insbesondere eignen sich die Verbindungen I zur Bekämpfung von *Erysiphe*-Arten und *Plasmopara viticola*.

Die Verbindungen I eignen sich außerdem zur Bekämpfung von Schadpilzen wie *Paecilomyces variotii* im Materialschutz (z.B. Holz, Papier, Dispersionen für den Ansprich, Fasern bzw. Gewebe) und im Vorratsschutz.

Die Verbindungen I werden angewendet, indem man die Pilze oder die vor Pilzbefall zu schützenden Pflanzen, Saatgüter, Materialien oder den Erdboden mit einer fungizid wirksamen Menge der Wirkstoffe behandelt. Die Anwendung kann sowohl vor als auch nach der Infektion der Materialien, Pflanzen oder Samen durch die Pilze erfolgen.

Die Aufwandmengen liegen bei der Anwendung im Pflanzenschutz je nach Art des gewünschten Effektes zwischen 0,001 und 5,0 kg, vorzugsweise 0,01 bis 2 kg, insbesondere 0,05 bis 1 kg, Wirkstoff pro ha.

Bei der Saatgutbehandlung werden im allgemeinen Wirkstoffmengen von 0,001 bis 0,1 g, vorzugsweise 0,01 bis 0,05 g, je Kilogramm Saatgut benötigt.

Bei der Anwendung im Material- bzw. Vorratsschutz richtet sich die Aufwandmenge an Wirkstoff nach der Art des Einsatzgebietes und des gewünschten Effekts. Übliche Aufwandmengen sind im Materialschutz beispielsweise 0,001 g bis 2 kg, vorzugsweise 0,005 g bis 1 kg, Wirkstoff pro Qubikmeter behandelten Materials.

Die Verbindungen I können aufgrund des nasischen Charakters der Stickstoffatome Salze oder Addukte mit Säuren und Metallionen bilden und sowohl als reine Verbindungen als auch in Form derartiger Salze bzw. Addukte angewendet werden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organischen Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der ersten bis achten Nebengruppe, vor allem Chrom, Mangan, Eisen, Kobalt, Nickel, Kupfer, Zink und daneben der zweiten Hauptgruppe, vor allem Calcium und Magnesium, der dritten und vierten Hauptgruppe, insbesondere Aluminium, Zinn und Blei in Betracht.

Die Metalle können dabei gegebenenfalls in verschiedenen ihnen zukommenden Wertigkeiten vorliegen.

Die Verbindungen I oder ihre Salze können in die üblichen Formulierungen überführt werden, z.B. Lösungen, Emulsionen, Suspensionen, Stäube, Pulver, Pasten und Granulate. Die Anwendungsform richtet sich nach dem jeweiligen Verwendungszweck; sie soll in jedem Fall eine feine und gleichmäßige Verteilung der erfindungsgemäßen Verbindung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B.Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Lignin-Sulfitablaugen und Methylcellulose.

Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate und Fettsäuren sowie deren Alkali- und Erdalkalisalze, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Ligninsulfitablaugen und Methylcellulose in Betracht.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, Methanol, Ethanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im allgemeinen zwischen 0,01 und 95 Gew.-%, vorzugsweise zwischen 0,1 und 90 Gew.-% des Wirkstoffs. Die Wirkstoffe werden dabei in einer Reinheit von 90% bis 100%, vorzugsweise 95% bis 100% (nach NMR-Spektrum) eingesetzt.

Beispiele für Formulierungen sind:
I. 5 Gew.-Teile einer erfindungsgemäßen Verbindung werden mit 95 Gew.-Teilen feinteiligem Kaolin innig vermischt. Man erhält auf diese Weise ein Stäubemittel, das 5 Gew.-% des Wirkstoffs enthält.
II. 30 Gew.-Teile einer erfindungsgemäßen Verbindung werden mit einer Mischung aus 92 Gew.-Teilen pulverförmigem Kieselsäuregel und8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit (Wirkstoffgehalt 23 Gew.-%).
III. 10 Gew.-Teile einer erfindungsgemäßen Verbindung werden in einer Mischung gelöst, die aus 90 Gew.-Teilen Xylol, 6 Gew.-Teilen des Anlagerungsproduktes von 8 bis 10 Mol Ethylenoxid an 1Mol Ölsäure-N-monoethanolamid, 2 Gew.-Teilen Calciumsalz der Dodecylbenzolsulfonsäure und 2 Gew.-Teilen des Anlagerungsproduktes von 40 Mol Ethylenoxid an 1 Mol Ricinusöl besteht (Wirkstoffgehalt 9 Gew.-%).
IV. 20 Gew.-Teile einer erfindungsgemäßen Verbindung werden in einer Mischung gelöst, die aus 60 Gew.-Teilen Cyclohexanon, 30 Gew.-Teilen Isobutanol, 5 Gew.-Teilen des Anlagerungsproduktes von 7 Mol Ethylenoxid an 1 Mol Isooctylphenol und 5Gew.-Teilen des Anlagerungsproduktes von 40 Mol Ethylenoxid an 1 Mol Ricinusöl besteht (Wirkstoffgehalt 16 Gew.-%).
V. 80 Gew.-Teile einer erfindungsgemäßen Verbindung werden mit 3 Gew.-Teilen des Natriumsalzes der Diisobutylnaphthalinalpha-sulfonsäure, 10 Gew.-Teilen des Natriumsalzes einer Ligninsulfonsäure aus einer Sulfit-Ablauge und 7 Gew.-Teilen pulverförmigem Kieselsäuregel gut vermischt und in einer Hammermühle vermahlen (Wirkstoffgehalt 80 Gew.-%).
VI. Man vermischt 90 Gew.-Teile einer erfindungsgemäßen Verbindung mit 10 Gew.-Teilen N-Methyl-α-pyrrolidon und erhält eine Lösung, die zur Anwendung in Form kleinster Tropfen geeignet ist (Wirkstoffgehalt 90 Gew.-%).
VII. 20 Gew.-Teile einer erfindungsgemäßen Verbindung werden in einer Mischung gelöst, die aus 40 Gew.-Teilen Cyclohexanon, 30Gew.-Teilen Isobutanol, 20 Gew.-Teilen des Anlagerungsproduktes von 7 Mol Ethylenoxid an 1 Mol Isooctylphenol und 10 Gew.-Teilen des Anlagerungsproduktes von 40 Mol Ethylenoxid an 1 Mol Ricinusöl besteht. Durch Eingießen und feines Verteilen der Lösung in 100 000 Gew.-Teilen Wasser erhält maneine wäßrige Dispersion, die 0,02 Gew.-% des Wirkstoffs enthält.
VIII. 20 Gew.-Teile einer erfindungsgemäßen Verbindung werden mit 3 Gew.-Teilen des Natriumsalzes der Diisobutylnaphthalin-α-sulfonsäure, 17 Gew.-Teilen des Natriumsalzes einer Ligninsulfonsäure aus einer Sulfit-Ablauge und 60 Gew.-Teilen pulverförmigem Kieselsäuregel gut vermischt und in einer Hammermühle vermahlen. Durch feines Verteilen der Mischung in 20000 Gew.-Teilen Wasser erhält man eine Spritzbrühe, die 0,1 Gew.-% des Wirkstoffs enthält.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Wäßrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

Die erfindungsgemäßen Mittel können in der Anwendungsform als Fungizide auch zusammen mit anderen Wirkstoffen vorliegen, der z.B. mit Herbiziden, Insektiziden, Wachstumsregulatoren, Fungiziden oder auch mit Düngemitteln. Beim Vermischen der Verbindungen I bzw. der sie enthaltenden Mittel in der Anwendungsform als Fungizide mit anderen Fungiziden erhält man in vielen Fällen eine Vergrößerung des fungiziden Wirkungsspektrums.

Die folgende Liste von Fungiziden, mit denen die erfindungsgemäßen Verbindungen gemeinsam angewendet werden können, soll die Kombinationsmöglichkeiten erläutern, nicht aber einschränken:
- Schwefel, Dithiocarbamate und deren Derivate, wie Ferridimethyldithiocarbamat, Zinkdimethyldithiocarbamat, Zinkethylenbisdithiocarbamat, Manganethylenbisdithiocarbamat, Mangan-Zink-ethylendiamin-bis-dithiocarbamat, Tetramethylthiuramdisulfide, Ammoniak-Komplex von Zink-(N,N-ethylen-bis-dithiocarbamat), Ammoniak-Komplex von Zink-(N,N'-propylen-bis-dithiocarbamat), Zink-(N,N'-propylenbis-dithiocarbamat), N,N'-Polypropylen-bis-(thiocarbamoyl)disulfid;
- Nitroderivate, wie Dinitro-(1-methylheptyl)-phenylcrotonat, 2-sec-Butyl-4,6-dinitrophenyl-3,3-dimethylacrylat, 2-sec-Butyl-4,6-dinitrophenyl-isopropylcarbonat, 5-Nitro-isophthalsäure-di-isopropylester;
- heterocyclische Substanzen, wie 2-Heptadecyl-2-imidazolin-acetat, 2,4-Dichlor-6-(o-chloranilino)-s-triazin, O,O-Diethylphthalimidophosphonothioat, 5-Amino-1-[bis-(dimethylamino)-phosphinyl]-3-phenyl-1,2,4- triazol, 2,3-Dicyano-1,4-dithioanthrachinon, 2-Thio-1,3-dithiolo[4,5-b]chinoxalin, 1-(Butylcarbamoyl)-2-benzimidazol-carbaminsäuremethylester, 2-Methoxycarbonylamino-benzimidazol, 2-(Furyl-(2))-benzimidazol, 2-(Thiazolyl-(4))-benzimidazol, N-(1,1,2,2-Tetrachlorethylthio)-tetrahydrophthalimid, N-Trichlormethylthio-tetrahydrophthalimid, N-Trichlormethylthio-phthalimid;
- N-Dichlorfluormethylthio-N',N'-dimethyl-N-phenyl-schwefelsäurediamid, 5-Ethoxy-3-trichlormethyl-1,2,3-thiadiazol, 2-Rhodanmethylthiobenzthiazol, 1,4-Dichlor-2,5-dimethoxybenzol, 4-(2-Chlorphenylhydrazono)-3-methyl-5-isoxazolon, Pyridin-2-thio-1-oxid, 8-Hydroxychinolin bzw. dessen Kupfersalz, 2,3-Dihydro-5-carboxanilido-6-methyl-1,4-oxathiin, 2,3-Dihydro-5-carboxanilido-6-methyl-1,4-oxathiin-4,4-dioxid, 2-Methyl-5,6-dihydro-4H-pyran-3-carbonsäure-anilid, 2-Methyl-furan-3-carbonsäureanilid, 2,5-Dimethyl-furan-3-carbonsäureanilid, 2,4,5-Trimethyl-furan-3-carbonsäureanilid, 2,5-Dimethyl-furan-3-carbonsäurecyclohexylamid, N-Cyclohexyl-N-methoxy-2,5-dimethyl-furan-3-carbonsäureamid, 2-Methyl-benzoesäureanilid, 2-Iod-benzoesäure-anilid, N-Formyl-N-morpholin-2,2,2-trichlorethylacetal, Piperazin-1,4-diylbis-1-(2,2,2-trichlorethyl)-formamid, 1-(3,4-Dichloranilino)-1-formylamino-2,2,2-trichlorethan;
- Amine wie 2,6-Dimethyl-N-tridecyl-morpholin bzw. dessen Salze, 2,6-Dimethyl-N-cyclododecyl-morpholin bzw. dessen Salze, N-[3-(p-tert.-Butylphenyl)-2-methylpropyl]-cis-2,6-dimethylmorpholin, N-[3-(p-tert.-Butylphenyl)-2-methylpropyl]-piperidin, (8-(1,1-Dimethylethyl)-N-ethyl-N-propyl-1,4-dioxaspiro[4.5]decan-2-methanamin;
- Azole wie 1-[2-(2,4-Dichlorphenyl)-4-ethyl-1,3-dioxolan-2-yl-ethyl]-1H-1,2,4-triazol, 1-[2-(2,4-Dichlorphenyl)-4-n-propyl-1,3-dioxolan-2-yl-ethyl]-1H-1,2,4-triazol, N-(n-Propyl)-N-(2,4,6-trichlorphenoxyethyl)-N'-imidazol-yl-harnstoff, 1-(4-Chlorphenoxy)-3,3-dimethyl-1-(1H-1,2,4-triazol-1-yl)-2-butanon, 1-(4-Chlorphenoxy)-3,3-dimethyl-1-(1H-1,2,4-triazol-1-yl)-2-butanol, (2RS,3RS)-1-[3-(2-Chlorphenyl)-2-(4-fluorphenyl)-oxiran-2-ylmethyl]-1H-1,2,4-triazol, 1-[2-(2,4-Dichlorphenyl)-pentyl]-1H-1,2,4-triazol, 2,4'-Difluor-a-(1H-1,2,4-triazolyl-1-methyl)-benzhydrylalkohol, 1-((bis-(4-Fluorphenyl)-methylsilyl)-methyl)-1H-1,2,4-triazol, 1-[2RS,4RS;-2RS,4SR)-4-brom-2-(2,4-dichlorphenyl)tetrahydrofuryl]-1H-1,2,4-triazol, 2--(4-Chlorphenyl)-3-cyclopropyl-1-(1H-1,2,4-triazol-1-yl)-butan-2-ol, (+)-4-Chlor-4-[4-methyl-2-(1H-1,2,4-triazol-1-ylmethyl)-1,3-dioxolan-2-yl]-phenyl-4-chlorphenylether, (E)-(R,S)-1-(2,4-dichlorphenyl)-4,4-dimethyl-2-(1H-1,2,4-triazol-1-yl)pent-1-en-3-ol, 4-(4-Chlorphenyl)-2-phenyl-2-(1H-1,2,4,-triazolylmethyl)-butyronitril, 3-(2,4-dichlorphenyl)-6-fluor-2-(1H-1,2,4-triazol-1-yl)chinazolin-4(3H)-on, (R,S)-2-(2,4-Dichlorphenyl)-1-H-1,2,4-triazol-1-yl)-hexano-2-ol, (1RS,5RS;1RS,5SR)-5-(4-chlorbenzyl)-2,2-dimethyl-1-(1H-1,2,4-triazol-1-ylmethyl)cyclopentanol, (R,S)-1-(4-chlorphenyl)-4,4-dimethyl-3-(1H-1,2,4-triazol-1-ylmethyl)pentan-3-ol, (+)-2-(2,4,-Dichlorphenyl)-3-(1H-1,2,4-triazolyl)-propyl-1,1,2,2-tetrafluorethylether, (E)-1-[1-[4-Chlor-2-trifluormethyl)-phenyl]-imino)-2-propoxyethyl]-1H-imidazol, 2-(4-Chlorphenyl)-2-(1H-1,2,4-triazol-1-ylmethyl)-hexannitril;
- α-(2-Chlorphenyl)-α-(4-chlorphenyl)-5-pyrimidin-methanol, 5-Butyl-2-dimethylamino-4-hydroxy-6-methyl-pyrimidin, Bis-(p-chlorphenyl)-3-pyridinmethanol, 1,2-Bis-(3-ethoxycarbonyl-2-thioureido)-benzol, 1,2-Bis-(3-methoxycarbonyl-2-thioureido)-benzol;
- Strobilurine wie Methyl-E-methoxyimino-[α-(o-tolyloxy)-o-tolyl]acetat, Methyl-E-2-{2-[6-(2-cyanophenoxy)-pyrimidin-4-yloxy]-phenyl}-3-methoxyacrylat, Methyl-E-methoxyimino-[α-(2-phenoxyphenyl)]-acetamid, Methyl-E-methoxyimino-[α-(2,5-dimethylphenoxy)-o-tolyl]-acetamid;
- Anilinopyrimidine wie N-(4,6-Dimethylpyrimidin-2-yl)-anilin, N-[4-Methyl-6-(1-propinyl)-pyrimidin-2-yl]-anilin, N-[4-Methyl-6-cyclopropyl-pyrimidin-2-yl]-anilin;
- Phenylpyrrole wie 4-(2,2-Difluor-1,3-benzodioxol-4-yl)-pyrrol-3-carbonitril;
- Zimtsäureamide wie 3-(4-Chlorphenyl)-3-(3,4-dimethoxyphenyl) -acrylsäuremorpholid;
- sowie verschiedene Fungizide, wie Dodecylguanidinacetat, 3-[3-(3,5-Dimethyl-2-oxycyclohexyl)-2-hydroxyethyl]-glutarimid, N-Methyl-, N-ethyl-(4-trifluormethyl,-2-[3',4'-dimethoxyphenyl]-benzoesäureamid, Hexachlorbenzol, DL-Methyl-N-(2,6-dimethyl-phenyl)-N-furoyl(2)-alaninat, DL-N-(2,6-Dimethyl-phenyl)-N-(2'-methoxyacetyl)-alanin-methyl- ester, N-(2,6-Dimethylphenyl)-N-chloracetyl-D,L-2-aminobutyrolacton, DL-N-(2,6-Dimethylphenyl)-N-(phenylacetyl)-alaninmethylester, 5-Methyl-5-vinyl-3-(3,5-dichlorphenyl)-2,4-dioxo-1,3-oxazolidin, 3-[3,5-Dichlorphenyl(-5-methyl-5-methoxymethyl]-1,3-oxazolidin-2,4-dion, 3-(3,5-Dichlorphenyl)-1-isopropylcarbamoylhydantoin, N-(3,5-Dichlorphenyl)-1,2-dimethylcyclopropan-1,2-dicarbonsäureimid, 2-Cyano-[N-(ethylaminocarbonyl)-2-methoximino]-acetamid, N-(3-Chlor-2,6-dinitro-4-trifluormethyl-phenyl)-5-trifluormethyl-3-chlor-2-aminopyridin.

### Synthesebeispiele

Die in den nachstehenden Synthesebeispielen wiedergegebenen Vorschriften wurden unter entsprechender Abwandlung der Ausgangsverbindungen zur Gewinnung weiterer Verbindungen I benutzt. Die so erhaltenen Verbindungen sind in den anschließenden Tabellen mit physikalischen Angaben aufgeführt.

### 1. 1-[4-Chlorphenyl]-propan-1,2-dion-2-oxim

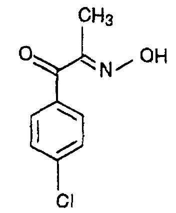

Eine Lösung aus 45 g (0,27 mol) 4-Chlorpropiophenon und 500 ml Toluol wurde zunächst bei -10°C bis -20°C tropfenweise mit 100 ml gesättigter etherischer Sälzsäure und anschließend mit einer Lösung aus 44,5 g n-Butylnitril in 200 ml Diethylether versetzt. Nach ca. 24 h bei 20-22°C wurde die Reaktionsmischung auf Eiswasser gegeben. Die organische Phase wurde isoliert und dreimal mit 1 N Natronlauge und einmal mit 3 N Natronlauge gewaschen. Die Natronlauge-Phasen wurden vereinigt und mit 20%-iger Schwefelsäure bis zum pH=5 angesäuert. Der dabei gebildete Niederschlag wurde isoliert und in tert.-Butylmethylether gelöst. Die Lösung wurde über Natriumsulfat getrocknet und das Lösungsmittel wurde bei vermindertem Druck entfernt. Man erhielt so 81,4 g des Produktes als gelblichen Feststoff.
¹H-NMR (CDCl₃, δ in ppm): 2,2 (s, 3H); 7,4 (m, 2H); 7,8 (m, 2H) ; 9,0 (s, 1H)

### 2. 4-Chlorphenyl-[E/E,Z/E]-2-hydroxyimino-1-methoxyiminopropan

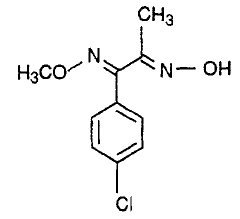

Eine Mischung aus 81,4 g 1-[4-Chlorphenyl]-propan-1,2-dion-2-oxim und 500 ml Methanol wurde mit 68,5 g (0,82 mol) O-Methyl-hydroxylamin-Hydrochlorid und 97 g (1,23 mol) Pyridin versetzt. Nach ca. 24 h bei 22-25°C wurde die Reaktionsmischung in 10%-ige Salzsäzre gegeben. Die Mischung wurde mehrfach mit tert.-Butylmethylether extrahiert. Die organischen Phasen wurden vereinigt, mit Wasser gewaschen und über Natriumsulfat getrocknet. Anschließend wurde das Lösungsmittel bei vermindertem Druck entfernt. Man erhielt so 89,4 g des Produkts (Isomerengemisch).

### 3. 4-Chlorphenyl-[E/E]-2-hydroxyimino-1-methoxyiminopropan

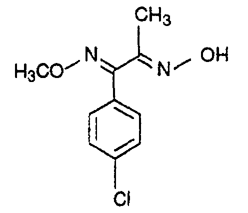

Eine Lösung von 89,4 g (0,39 mol) 4-Chlorphenyl-[E/E,Z/E]-2-hydroxyimino-1-methoxyiminopropan in 500 ml Toluol wurde bei 40°C langsam mit 26,6 g (0,2 mol) Aluminium-trichlorid versetzt. Nach 5 h bei 50°C und weiteren 24 h bei 20-22°C wurde das Reaktionsgemisch auf eine Mischung von Eis und 10%-iger Salzsäure gegeben. Das so erhaltene Gemisch wurde mehrfach mit tert.-Butylmethylether extrahiert. Die organischen Phasen wurden vereinigt, mit 10%-iger Salzsäure und anschließend mit Wasser gewaschen und getrocknet. Anschließend wurde das Lösungsmittel bei vermindertem Druck entfernt. Man erhielt so 50,6 g des Produkts als farblosen Feststoff (Fp.: 175-178°C; Isomerenverhältnis 98,5% E/E und 1,5% Z/E).
¹H-NMR (CDCl₃, δ in ppm): 2,1 (s, 3H); 4,0 (s, 3H); 7,1 (m, 2H) ; 7,3 (m, 2H); 8,0 (s, 1H)

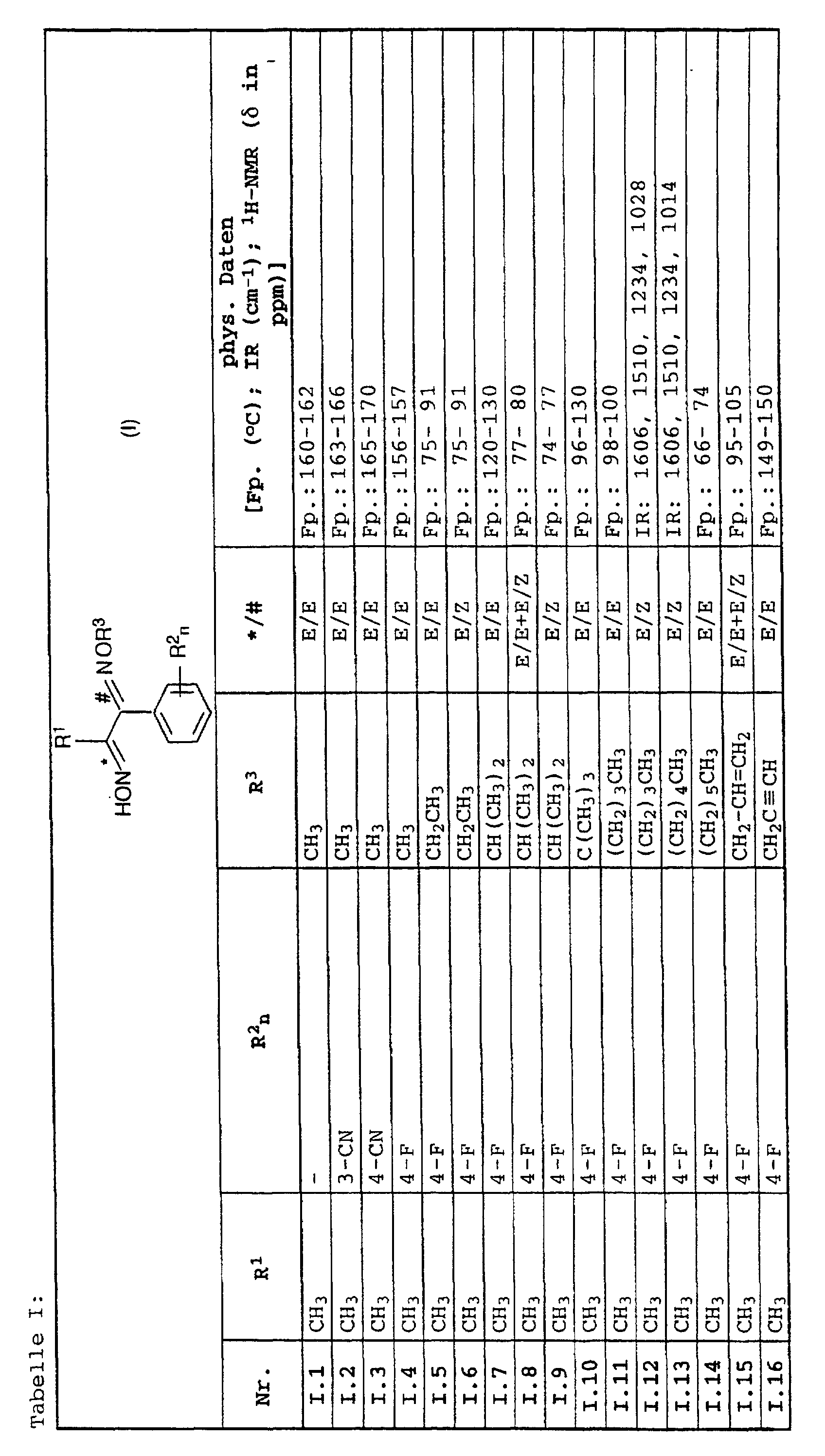

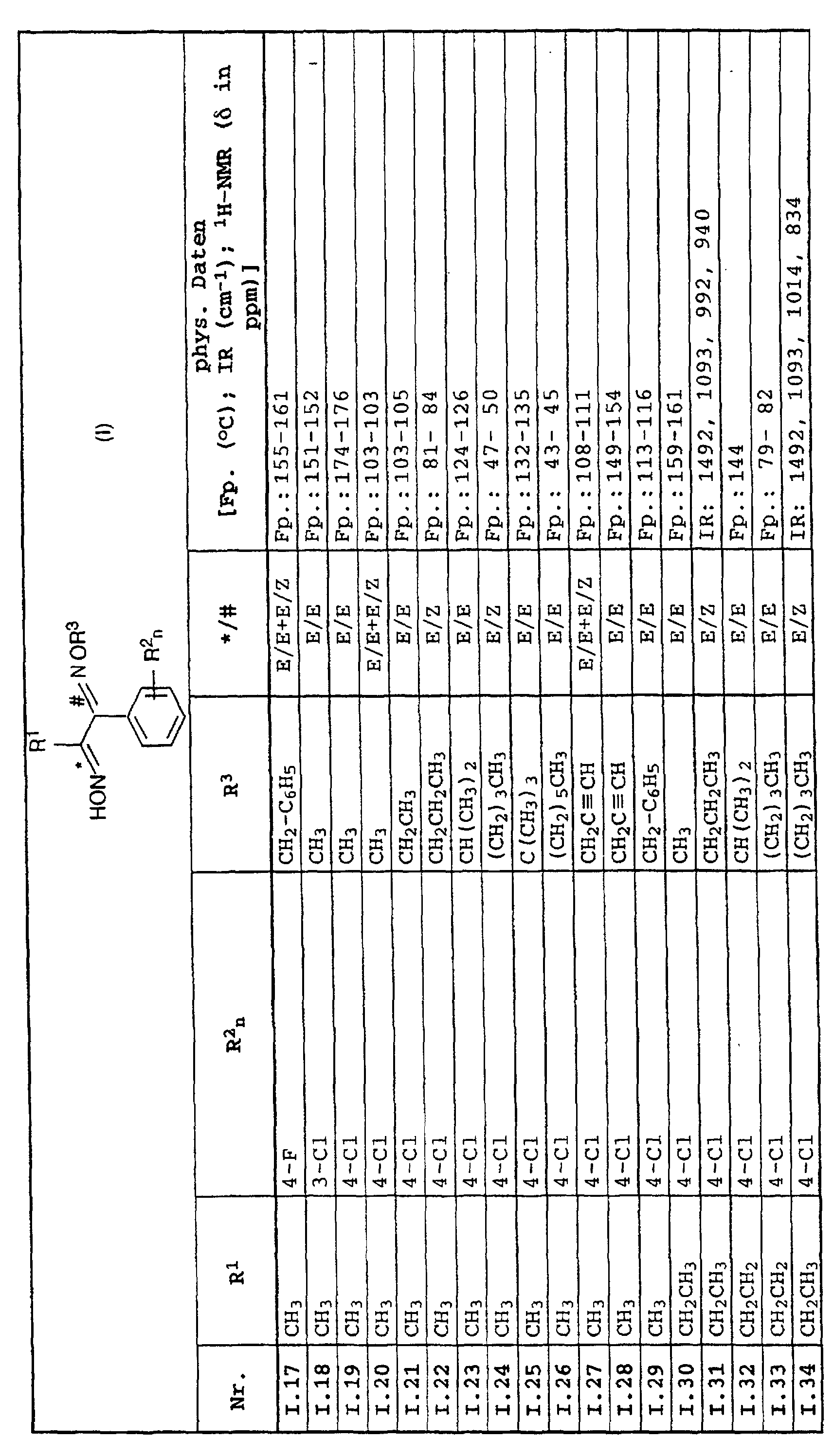

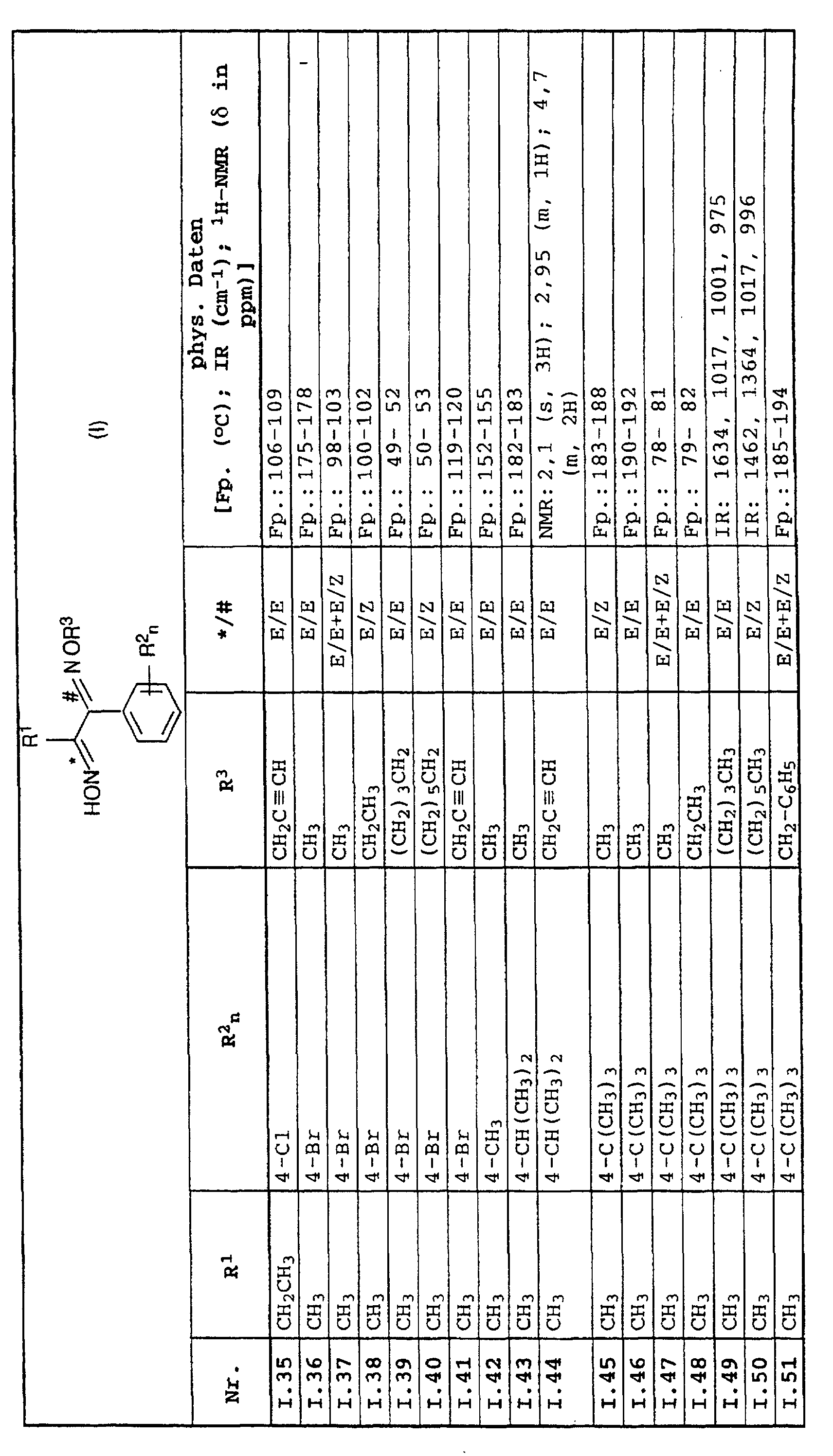

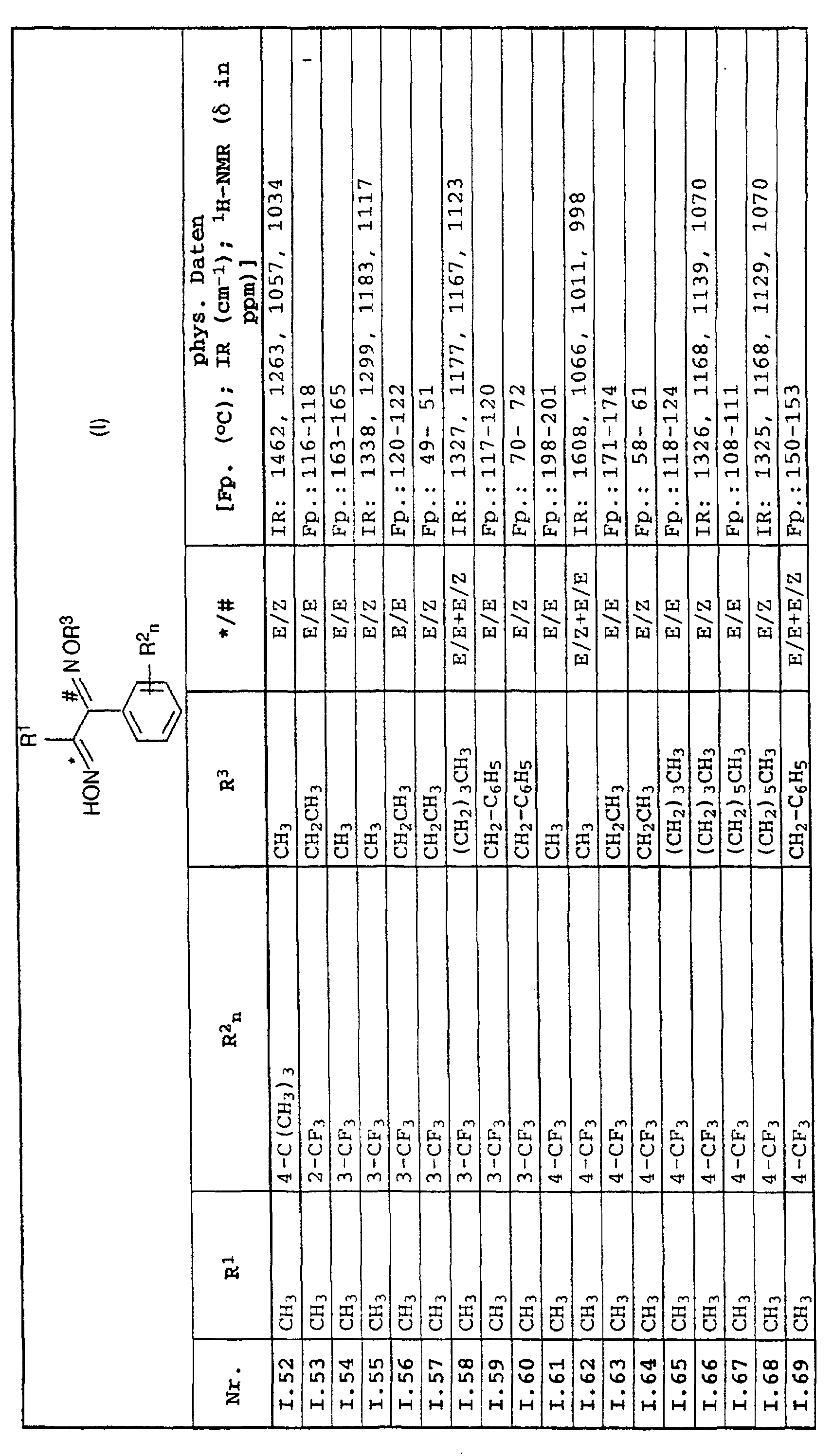

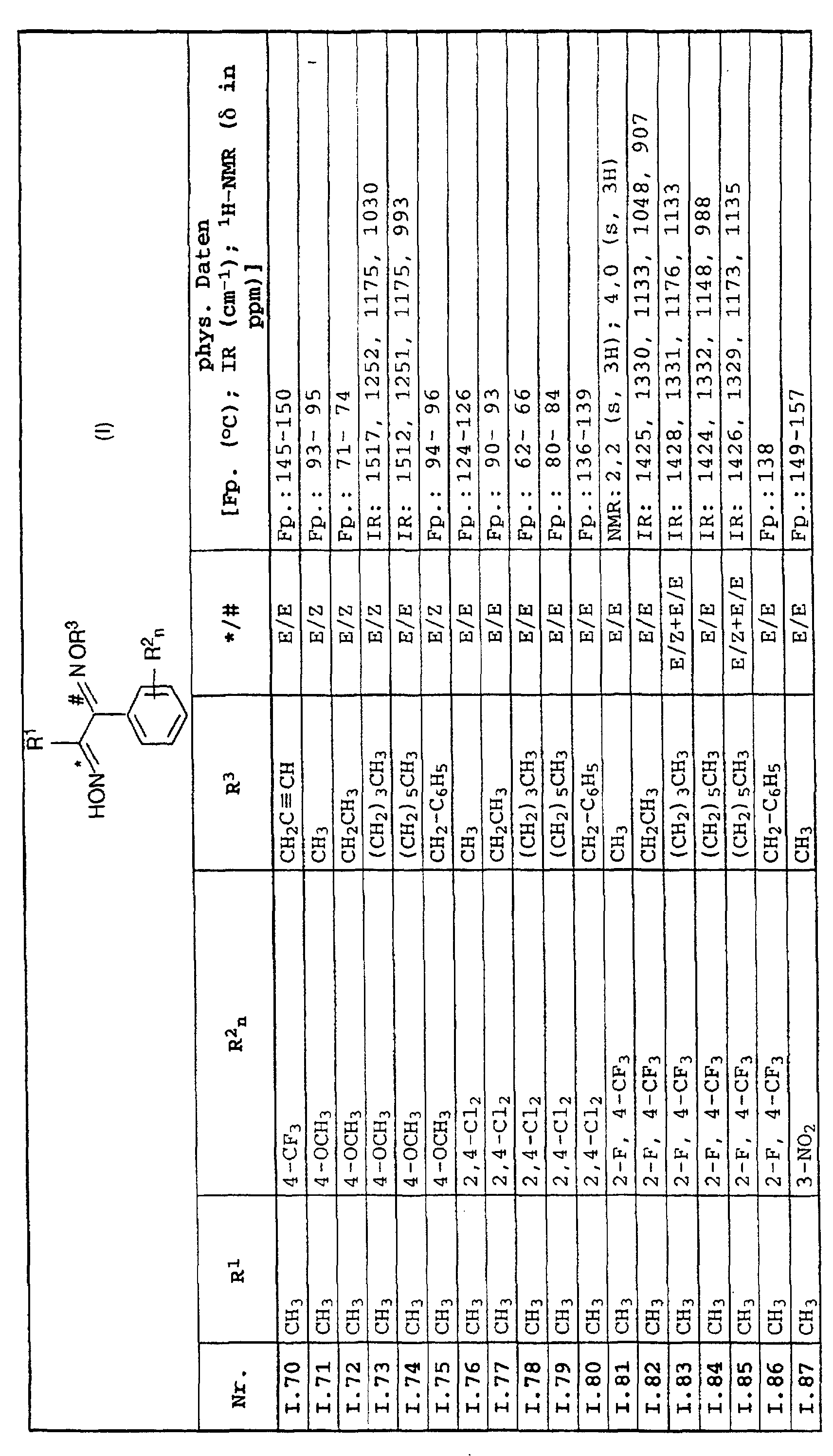

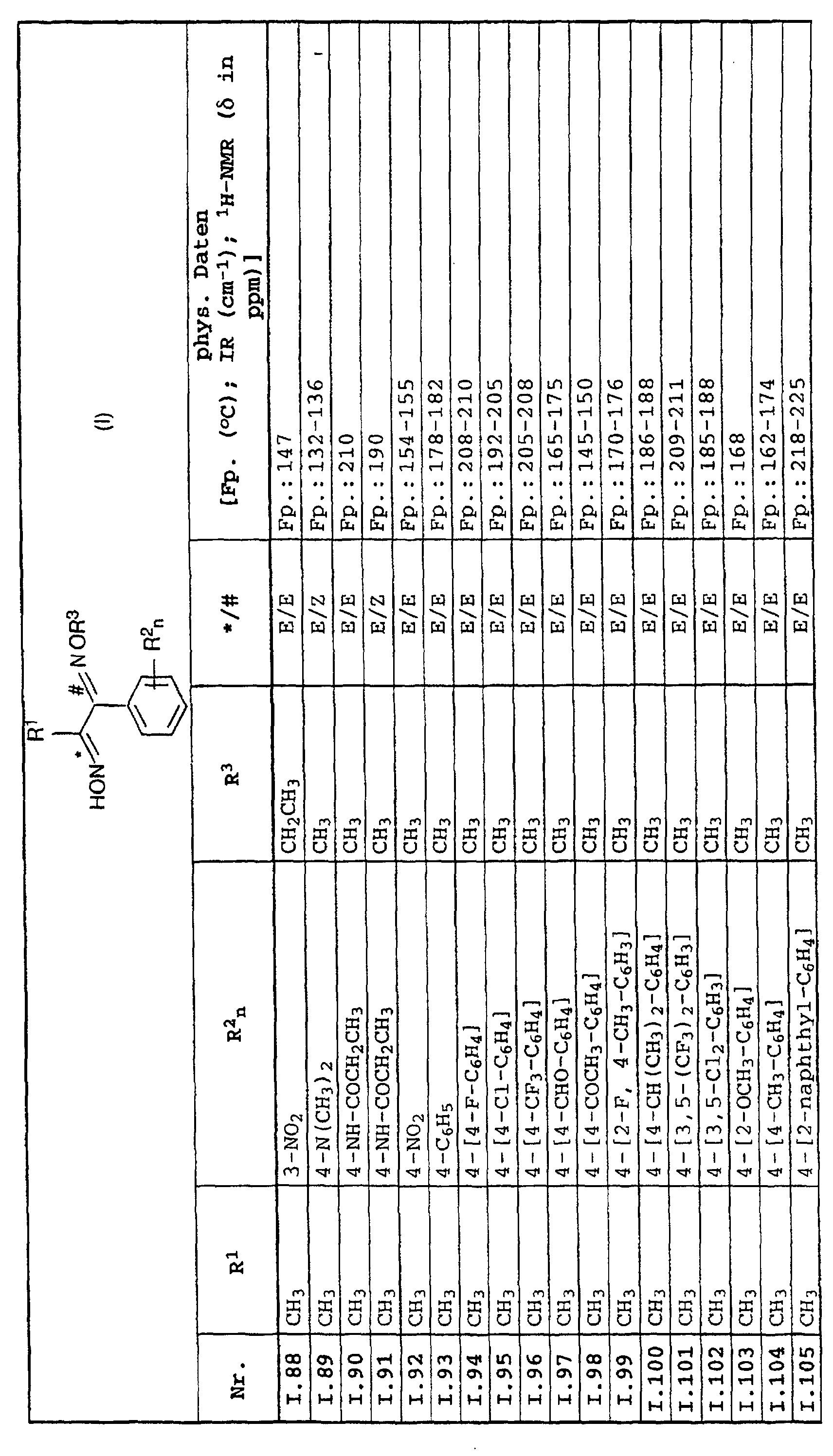

### Beispiele für die Wirkung gegen Schadpilze:

Die fungizide Wirkung der Verbindungen der allgemeinen Formel I ließ sich durch die folgenden Versuche zeigen:

Die Wirkstoffe wurden als 10%ige Emulsion in einem Gemisch aus 63 Gew.-% Cyclohexanon und 27 Gew.-% Emulgator aufbereitet und entsprechend der gewünschten Konzentration mit Wasser verdünnt.

### 1. Wirkung gegen Erysiphe graminis var. tritici (Weizenmehltau)

Blätter von Weizenkeimlingen (Sorte "Frühgold") wurden zunächst mit der wäßrigen Aufbereitung der Wirkstoffe behandelt (Aufwandmenge: 250 ppm). Nach ca. 24h wurden die Pflanzen mit Sporen des Weizenmehltaus (*Erysiphe graminis var. tritici*) bestäubt. Die so behandelten Pflanzen wurden anschließend für 7 Tage bei 20-22°C und einer relativen Luftfeuchtigkeit von 75-80% inkubiert. Anschließend wurde das Ausmaß der Pilzentwicklung ermittlelt.

In diesem Test zeigten die mit den Verbindungen I.5, I.15, I.19, I.20, I.21, I.22, I.27, I.28, I.36, I.42, I.63 und I.76 behandelten Pflanzen eeinen Befall von 10% und weniger, während die unbehandelten (Kontroll-) Pflanzen zu 75% befallen waren.

### 2. Wirkung gegen Plasmopara viticola

Blätter von Topfreben der Sorte "Müller-Thurgau" wurden mit wäßriger Wirkstoffaufbereitung bis zur Tropfnäße besprüht. Um die Dauerwirkung der Substanzen beurteilen zu können, wurden die Pflanzen nach dem Antrocknen des Spritzbelages für 7 Tage im Gewächshaus aufgestellt. Erst dann wurden die Blätter mit einer wäßrigen Zoosporenaufschwemmung von *Plasmopara viticola* inokuliert. Danach wurden die Reben zunächst für 48 h in einer wasserdampfgesättigten Kammer bei 24°C und anschließend für 5 d im Gewächshaus bei Temperaturen zwischen 20 und 30°C aufgestellt. Nach dieser Zeit wurden die Pflanzen zur Beschleunigung des Sporangienträgerausbruchs abermals für 16 h in eine feuchte Kammer gestellt. Dann wurde das Ausmaß der Befallsentwicklung auf den Blattunterseiten visuell ermittelt.

In diesem Test zeigten die mit 250 ppm der Verbindungen I.39, I.44 und I.83 behandelten Pflanzen eine Befall von 15% und weniger, während die unbehandelten (Kontroll-) Pflanzen zu 70% befallen waren.

## Patentansprüche

1. Verfahren zur Bekämpfung von Schadpilzen, **dadurch gekennzeichnet, daß** man die Pilze oder die vor Pilzbefall zu schützenden Materialien, Pflanzen, den Boden oder Saatgüter mit einer wirksamen Menge eines Bisoxims der allgemeinen Formel I 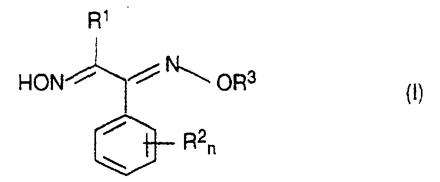 oder dessen Salz oder Addukt behandelt, wobei der Index und die Substituenten die folgende Bedeutung haben:
R¹ Halogen, C₁-C₆-Alkyl oder C₁-C₄-Halogenalkyl;
R² Cyano, Nitro, Halogen, C₁-C₄-Alkyl, C₁-C₄-Halogenalkyl, C₁-C₄-Alkoxy, C₁-C₄-Halogenalkoxy, C₁-C₄-Alkylthio, C₁-C₄-Alkylamino, Di-C₁-C₄-alkylamino, C₁-C₄-Alkylaminocarbonyl,
Phenyl, Phenoxy oder Phenylthio, wobei diese Reste im Phenylteil partiell oder vollständig halogeniert sein können und/oder eine bis drei der folgenden Gruppen tragen können: Cyano, Formyl, C₁-C₄-Alkyl, C₁-C₄-Halogenalkyl, C₁-C₄-Alkylcarbonyl, C₁-C₄-Alkoxy, C₁-C₄-Halogenalkoxy, Phenyl oder Naphthyl;
n 0, 1, 2 oder 3, wobei die Reste R² verschieden sein können, wenn n 2 oder 3 bedeutet;
R³ C₁-C₁₀-Alkyl, C₁-C₆-Halogenalkyl, C₃-C₆-Alkenyl, C₃-C₆-Halogenalkenyl, C₃-C₆-Alkinyl, C₃-C₆-Halogenalkinyl oder Phenyl-C₁-C₄-alkyl.

2. Verfahren nach Anspruch 1, **dadurch gekennzeichnet, daß** man eine Verbindung der Formel I gemäß Anspruch 1 verwendet, in der R¹ für Chlor, Methyl, Trifluormethyl oder Ethyl steht.

3. Verfahren nach Anspruch 1, **dadurch gekennzeichnet, daß** man eine Verbindung der Formel I gemäß Anspruch 1 verwendet, in der mindestens einer der Reste R² für Halogen steht.

4. Verfahren zum Schutz von Kulturpflanzen vor Schadpilzen gemäß Anspruch 1 **dadurch gekennzeichnet, daß** man die von Schadpilzen freizuhaltenden Kulturpflanzen oder ihren Lebensraum mit 0,001 bis 5,0 kg/ha einer Verbindung I gemäß Anspruch 1 behandelt.

5. Verfahren zum Schutz von Saatgut, Materialien oder Räumen vor Schadpilzen, **dadurch gekennzeichnet, daß** man die von Schadpilzen freizuhaltenden Saatgüter, Materialien oder Räume mit 0,01 bis 20 g/m³ einer Verbindung I gemäß Anspruch 1 behandelt.

6. Verwendung der Verbindungen I gemäß Anspruch 1 zur Herstellung eines zur Bekämpfung von Schadpilzen geeigneten Mittels.

## Claims

1. Method of controlling harmful fungi, **characterized in that** the fungi, or the materials, plants, the soil or seeds to be protected against fungal infection, are treated with an effective amount of a bisoxime of the formula I 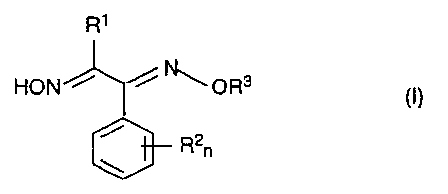 or a salt or adduct thereof, the index and the substituents having the following meanings:
R¹ is halogen, C₁-C₆-alkyl or C₁-C₄-haloalkyl;
R² is cyano, nitro, halogen, C₁-C₄-alkyl, C₁-C₄-haloalkyl, C₁-C₄-alkoxy, C₁-C₄-haloalkoxy, C₁-C₄-alkylthio, C₁-C₄-alkylamino, di-C₁-C₄-alkylamino, C₁-C₄-alkylaminocarbonyl,
phenyl, phenoxy or phenylthio, it being possible for these radicals to be partially or fully halogenated in the phenyl moiety and/or to have attached to them one to three of the following groups: cyano, formyl, C₁-C₄-alkyl, C₁-C₄-haloalkyl, C₁-C₄-alkylcarbonyl, C₁-C₄-alkoxy, C₁-C₄-haloalkoxy, phenyl or naphthyl;
n is 0, 1, 2 or 3, it being possible for the radicals R² to be different if n is 2 or 3;
R³ is C₁-C₁₀-alkyl, C₁-C₆-haloalkyl, C₃-C₆-alkenyl, C₃-C₆-haloalkenyl, C₃-C₆-alkynyl, C₃-C₆-haloalkynyl or phenyl-C₁-C₄-alkyl.

2. Method according to claim 1, **characterized in that** use is made of a compound of the formula I of claim 1 where R¹ is chlorine, methyl, trifluoromethyl or ethyl.

3. Method according to claim 1, **characterized in that** use is made of a compound of the formula I of claim 1 where at least one of the radicals R² is halogen.

4. Method of protecting crop plants against harmful fungi according to claim 1, **characterized in that** the crop plants to be kept free from harmful fungi, or their environment, are treated with 0.001 to 5.0 kg/ha of a compound I of claim 1.

5. Method of protecting seed, materials or areas against harmful fungi, **characterized in that** the seeds, materials or areas to be kept free from harmful fungi are treated with from 0.01 to 20 g/m³ of a compound I of claim 1.

6. Use of a compound I of claim 1 for the preparation of a composition which is suitable for controlling harmful fungi.

## Revendications

1. Procédé de lutte contre des champignons nuisibles, **caractérisé en ce que** les champignons ou les matériaux, les plantes, les sols ou les semences à protéger vis-à-vis d'une infection fongique sont traités par une quantité efficace d'un bis-oxime de formule générale I 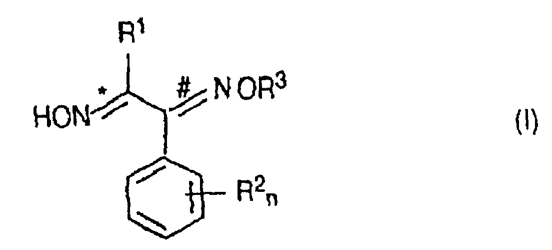 ou de son sel ou produit d'addition, l'indice et les substituants ayant la signification suivante :
R¹ représente un halogène, un alkyle en C₁-C₆ ou un halogénoalkyle en C₁-C₄ ;
R² représente un cyano, un nitro, un halogène, un alkyle en C₁-C₄, un halogénoalkyle en C₁-C₄, un alcoxy en C₁-C₄, un halogénoalcoxy en C₁-C₄, un alkylthio en C₁-C₄, un alkylamino en C₁-C₄, un di-C₁-C₄-alkylamino, un C₁-C₄-alkylaminocarbonyle,
un phényle, un phénoxy ou un phénylthio, ces radicaux pouvant être partiellement ou totalement halogénés dans la partie phényle et/ou pouvant porter un à trois des groupes suivants : un cyano, un formyle, un alkyle en C₁-C₄, un halogénoalkyle en C₁-C₄, un C₁-C₄-alkylcarbonyle, un alcoxy en C₁-C₄, un halogénoalcoxy en C₁-C₄, un phényle ou un naphtyle ;
n vaut 0, 1, 2 ou 3, les radicaux R² pouvant être différents, si n vaut 2 ou 3 ;
R³ représente un alkyle en C₁-C₁₀, un halogénoalkyle en C₁-C₆, un alcényle en C₃-C₆, un halogénoalcényle en C₃-C₆, un alcynyle en C₃-C₆, un halogénoalcynyle en C₃-C₆ ou un phényl-C₁-C₄-alkyle.

2. Procédé selon la revendication 1, **caractérisé en ce que** l'on utilise un composé de formule I selon la revendication 1, dans laquelle R¹ désigne un chlore, un méthyle, un trifluorométhyle ou un éthyle.

3. Procédé selon la revendication 1, **caractérisé en ce que** l'on utilise un composé de formule I selon la revendication 1, dans laquelle au moins l'un des radicaux R² désigne un halogène.

4. Procédé de protection de plantes de culture vis-à-vis des champignons nuisibles selon la revendication 1, **caractérisé en ce que** les plantes de culture destinées à être maintenues exemptes de champignons nuisibles ou leur environnement sont traités avec de 0,001 à 5,0 kg/ha d'un composé I selon la revendication 1.

5. Procédé de protection de semences, de matériaux ou d'espaces vis-à-vis des champignons nuisibles, **caractérisé en ce que** les semences, les matériaux ou les espaces destinés à être maintenus exempts de champignons nuisibles sont traités avec de 0,01 à 20 g/m³ d'un composé I selon la revendication 1.

6. Utilisation des composés I selon la revendication 1 pour la préparation d'une composition appropriée pour la lutte contre des champignons nuisibles.
